# EUROPÄISCHE PATENTSCHRIFT

(11) **EP 0 969 681 B1**
(45) Veröffentlichungstag und Bekanntmachung des Hinweises auf die Patenterteilung: **09.01.2008**
(21) Anmeldenummer: 99110519.8
(22) Anmeldetag: 01.06.1999
(51) Int. Cl.: G06F 17/30

(54) **Verfahren zur Analyse von Daten in Telekommunikationsanlagen**
Methode for analysis of data in telecommunication equipment
Méthode d'analyse de données dans des installations de télécommunication

(30) Priorität: 05.06.1998 DE 19825331
(43) Veröffentlichungstag der Anmeldung: 05.01.2000
(73) Patentinhaber: T-Mobile Deutschland GmbH, 53227 Bonn (DE)
(72) Erfinder: Drees, Torsten, D-53757 Sankt Augustin (DE); Herre, Roland, D-89160 Dornstadt-Bollingen (DE); Schröder, Tim, D-53804 Much (DE)
(74) Vertreter: Riebling, Peter

(56) Entgegenhaltungen:
- WO-A-96/25715
- US-A- 5 488 715

## Beschreibung

Die Erfindung betrifft ein Verfahren zur Analyse von Daten in Telekommunikationsanlagen, nach dem Oberbegriff des Patentanspruchs 1.

Die US 5 488 715 A offenbart ein Verfahren zum Verkehrsdatenmanagement und zur Netzwerküberwachnung in einem Telekommunikationsnetzwerk, bei dem die zu analysierenden Daten mittels Datenumformem entsprechend vordefinierbarer Ordnungskriterien gruppiert werden und unter Anwendung wählbarer Selektionskriterien in mehreren Formaten parallel ausgebbar sind.

Es ist die Aufgabe der Erfindung, ein Verfahren zur schnellen und einfachen Analyse von Daten, insbesondere Massendaten, anzugeben, wie sie in Telekommunikationsanlagen wie z.B. Telefonvermittlungsstellen systemintern erzeugt und/oder gespeichert werden.

Diese Aufgabe wird gelöst durch ein Verfahren zur Analyse von Daten in Telekommunikationsanlagen, bei dem die Daten, insbesondere Massendaten, wie sie in Telekommunikationsanlagen systemintern erzeugt und/oder gespeichert werden, in ein oder mehrere Datensätze mit einem oder mehreren Datenfeldern unterteilt werden, und unter Anwendung wählbarer Selektionskriterien Ausgabedateien in mehreren Formaten gleichzeitig erzeugt werden, wobei die Informationen der Daten in Inhaltselemente und Zugriffselemente aufgeteilt werden, die wiederum für sich gruppiert werden, wobei die Datensätze entsprechend der Ordnungskriterien einzeln in einem Datenumformer in Inhaltsdaten in einem internern Zwischenformat umgewandelt werden, und in einer Symbolzugriffstabelle die Namen aller Datenfelder definiert sind, und dass die Symbolzugriffstabelle einen Zugriff auf jedes Datenfeld des Zwischenformats mit Hilfe des Namens des Datenfeldes und einen Zugang für Selektions- oder Filtersysteme bereitstellt.

Das erfindungsgemäße Verfahren erlaubt einen schnellen und einfachen Zugriff auf Daten und deren Validierung, ohne sie einem umfangreichen und komplexen Nachverarbeitungssystem zuzuführen. Es erleichtert die Qualitätsicherung der Erhebungsdaten die größten Teils in einem herstellerspezifischen Format vorliegen.

Es wird somit eine relativ einfache Strukturierung und Auswahl von Daten vorgesehen, die von kompliziertes Nachverarbeitungssystemen für Telekommunikationsdaten, wie sie aus dem Stand der Technik bekannt sind, unabhängig sind.

Durch die Aufteilung der Informationen der Daten in Inhaltselemente und Zugriffselemente, die wiederum für sich gruppierbar sind, kann beispielsweise eine Symbolzugriffstabelle erzeugt werden, die Zugriffe auf Dateninhalte steuert und Selektions-bzw. Filtersystemen zugänglich ist.

Es können darüber hinaus statistische Funktionen vorgesehen werden, wobei auf die Rohdaten zugegriffen werden kann oder wahlweise auf die durch den Datenumformer gruppierten Daten. Wurde eine Aufteilung in Inhalts- und Zugriffselemente vorgesehen, so kann ein Zugriff für Statistikzwecke auf die Inhaltselemente und/oder die Zugriffselemente erfolgen.

Das Verfahren bedient sich bevorzugt gängiger Programmiersprachen. Es verfügt über neue Optionen auf dem Gebiet der Analyseverfahren für Telekommunikationsdaten wie vordefinierbare Ordnungskriterien, die freie Definition von Selektionskriterien, gegebenenfalls in Kombination mit wählbaren Ausgabeformaten, Modularität, und schnelle gleichzeitige und parallele Ausgaben verschiedener Formate.

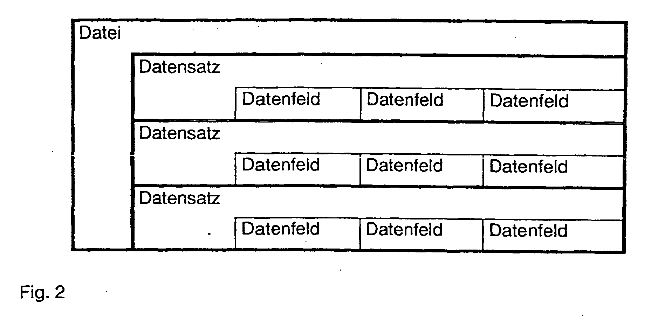

Die Daten, insbesondere Massendaten, werden entsprechend der vordefinierten Ordnungskriterien bevorzugt in einen oder mehrere Datensätze unterteilt (Fig. 2). Diese Datensätze sind beispielsweise Gebührendaten, Securitydaten und Registrierdaten. Die zu behandelnden Daten werden, Datensatz für Datensatz, einzeln umgewandelt bewertet und ausgegeben.

Eine Datei enthält einen oder mehrere Datensätze. Ein Datensatz enthält ein oder mehrere Datenfelder.

Durch den relativ geringen Aufwand an Datenumformung und die mögliche Unabhängigkeit von Nachverarbeitungssystemen sowie die weitgehend freie Definierbarkeit der Vorgaben erhält das System eine hohe Flexibilität (schneller Zugriff auf systemspezifische Daten und Datenformate).

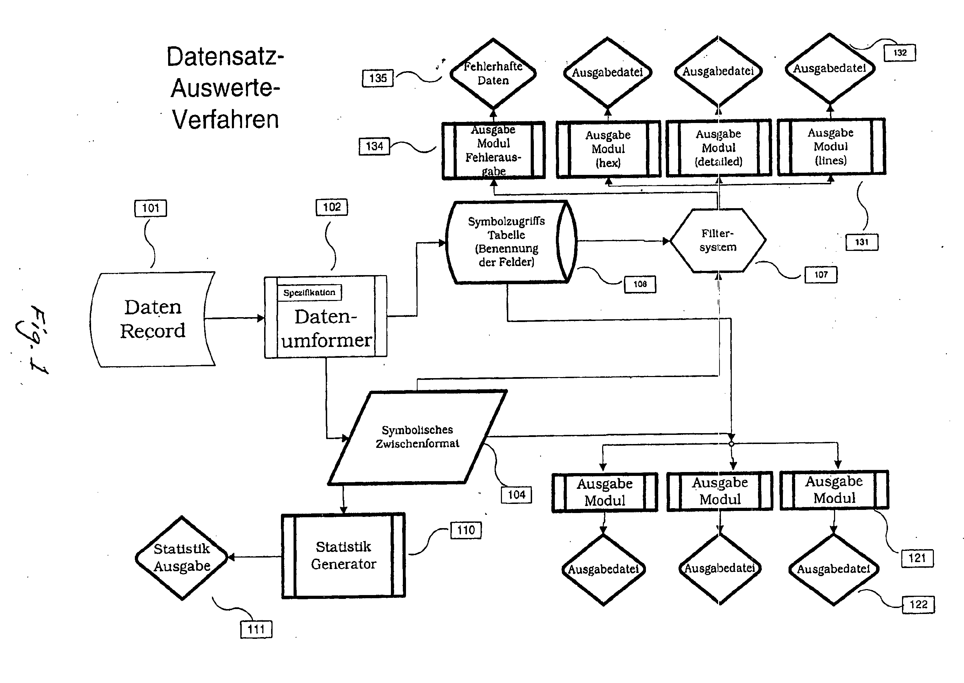

Im folgenden wird anhand der Figur 1 eine spezielle Ausführungsform der Erfindung beschrieben.

### Datenaufbereitung:

Binär kodierte Daten [101] werden einem Datenumformer [102] zugeführt, der genaue Kodiervorschriften beinhaltet. Diese Kodiervorschriften sind ASN.1 Spezifikationen oder Spezifikationen anderer binärer Formate. Die Datensätze werden entsprechend der Ordnungskriterien einzeln in dem Datenumformer in Inhaltsdaten in einem internen Zwischenformat[104] umgewandelt. Zur Weiterverarbeitung stellt der Datenumformer darüber hinaus folgende Daten zur Verfügung:
- Symbolzugriffstabelle zur Konfiguration des Zwischenformates
   In der Symbolzugriffstabelle [106] sind die Namen aller Datenfelder definiert. Die Symbolzugriffstabelle ermöglicht den Zugriff auf jedes Datenfeld des symbolischen Zwischenformates [104] mit Hilfe des Namens des Datenfeldes.
   Das symbolische Zwischenformat [104] beinhaltet alle in der Symbolzugriffstabelle spezifizierten Datenfelder.
- Konfiguration der Statistik
   Der Datenumformer erzeugt Konfigurationsdaten über die Art der Statistik. Dort wird für jedes relevante Feld Daten definiert welche Statistikfunktion[110] benutzt wird. Die Art der Statistik beinhaltet die Zählung von Datensätzen, Datenfeldern und benutzerdefinierten Aggregationen.

### Darstellungsverfahren:

Zur Darstellung der zu verarbeitenden Daten gibt es verschiedene Ausgabeformate [121] [122], die gleichzeitig erstellt werden können.

Diese sind:
→ Formate zur Feinanalyse:
   → Hexadezimales Format:
      Im hexadezimalen Format wird jeweils ein Datensatz pro Zeile ausgegeben, Das hexadezimale Format wird zur Feinanalyse benutzt.
   → Detailliertes Format
      Das detaillierte Format ist ein komfortables Format in dem jedes Datenfeld bis auf Bitebene in seinen zugeordneten Wert übersetzt wird. Die Ausgabe der Werte entspricht dem Layout der Dateispezifikation. Die Ausgabe erfolgt in Klartext. Die Datenfelder sind mit ihren Namen bezeichnet.
   → Decoder:
      Die Decoderausgabe basiert auf den in den Dateispezifikationen benutzten Namen. Die Werte werden unübersetzt und unformatiert ausgegeben.
→Formate zur automatischen Analyse:
   →Zeilenformat:
      Das Zeilenformat enthält eine einstellbare Kurzfassung der Datensätze. Im Ausgabeformat steht ein Datensatz pro Zeile. Dieser Datensatz enthält genau die Felder, die der Benutzer ausgewählt hat.
      Eine elektronische Weiterverarbeitung durch Datenbankapplikationen, Tabellenkalkulationsprogramme oder durch einfachebetriebssystemgegebene Kommandos wie z.B. Sortieralgorithmen ist möglich.
   →Statistik[111]:
      Die Statistik ermöglicht eine Plausibilitätsprüfung bei Massendaten. Es werden die Anzahl verschiedener Felder und die Anzahl verschiedener Werte in diesen Feldern gezählt.

Bei jedem Ablauf dieses Verfahrens, werden die Ausgabedateien gleichzeitig erzeugt. Dabei kann spezifiziert werden, welche Ausgaben erzeugt werden und wie diese benannt werden sollen. Jede Kombination von Ausgaben ist möglich.
Unmittelbar nach der Verarbeitung jedes Datensatzes wird dieser in die ausgewählten Ausgabedateien geschrieben. Die Ausgabedaten entstehen zeitgleich

### Seiektoren[107]:

Selektoren wählen auf der Basis von Selektionskriterien eine Teilmenge von Datensätzen aufgrund eines Datenfeldes aus. Die Selektoren sind frei konfigurierter, bezogen auf den Datenfeldinhalt oder Existenz des Datenfeldes. Die Selektoren lassen sich logisch verknüpfen. Jeder boolsche Verknüpfungsausdruck ist als Verknüpfungsmethode möglich.
Weitere Verknüpfungen mit bereits bestehenden Verknüpfungen sind möglich.
Die Anzahl der Verknüpfungsebenen, sowie die Anzahl der Verknüpfungen ist unbeschränkt.

Beliebige Ausgaben [132] sind für Teilmenge [107] zusätzlich zu den obengenannten Ausgaben möglich. Die Art des Ausgabeformates [131] ist beliebig.
Eine Definition von Filtern [107] mit Hilfe der Selektoren ermöglicht eine Plausibilitätsprüfung der Daten [134] [135].

### Beispiel:

### Beispielspezifikation: In diesem Fall ASN.1 Spezifikation.

```
 BeispielDatensatz ::= [PRIVATE 1] implicit Sequence
 {
 successfulAction SuccessfulAction,
 usedResources UsedResources,
 initiatorIdentifier InitiatorIdentifier

 SuccessfulAction ::= INTEGER
 {
 no (0)
 yes (1)
 unknown (2)
         }

 UsedResources :: INTEGER

 {
 noRecources (0)
 transferResources (1)
 transportResources (2)
 allResources (3)
                   }

 InitiatorIdentifier ::= [PRIVATE 9] IMPLICIT OCTET STRING (size (1..18))
 Name or Number of Initiator in ASCII
```

### Rohdaten:

Die Rohdaten sind hier aus Darstellungsgründen im hexadezimalen Format beschrieben. Sie geben den binären Inhalt wieder.
1: E1 0A 02 01 01 02 01 02 C9 02 31 32
2:E1 OA 02 01 00 02 01 02 C9 02 31 32
3: E1 DA 02 01 01 02 01 03 C9 02 32 33
"E1" ist Tag für BeispielDatensatz
"0A" ist die Anzahl der folgenden Bytes des Datensatzes.
"02" Integer für succsessful Action
"01" ist die Länge des Integers
"0x" ist der der Wert des Integers mit x=1 oder x=0
"02 01 0x" Zweiter Integer mit x=2 oder x=3 für usedResources
"C9" Tag Private 9 TextType für initiatorIdentifier
"02" Länge des Feldes
"31" hexadezimaler Ausdruck für 1.
"32" hexadezimaler Ausdruck für 2

### Formatierte Ausgaben:

Umgewandelt in das detaillierte Format:
1:
   SuccsessfulAktion : Ja
   UsedResources : resource Nr-2
   InitiatorIdentifier : 12
2:
   SuccsessfulAktion: Nein
   UsedResources : resource Nr. 2
   InitiatorIdentifier: 12
3:
   SuccsessfulAktion: Ja
   UsedResources : All resorces
   InitiatorIdentifier : 23

Umgewandelt in das Decoderformat:
1:
   BeispielDatensatz sequence

   ```
 {-SEQUENCE-
  succsessfulAction '1'H -"." -;
  usedResources '2'H - "."-;
 initiatorIdentifier '31 32'H -"12" -
 }
```
2:
   BeispielDatensatz sequence

   ```
 {-SEQUENCE -
  succsessfulAction '0'H --"." -;
  usedResources '2'H - "."-;
  initiatorIdentifier '31 32'H -"12"-
 }
```
3:
   BeispielDatensatz sequence

   ```
 {- SEQUENCE -
 succsessfulAction '1'H - ". " -;
 usedResources '3'H - "." -;
 initiatorIdentifier '31 32'H - "23" -
 }
```

Zeilenformat:
1: Yes 2 12
2:No 2 12
3: Yes 3 23

Ist der Benutzter nicht an dem initiator interessiert, kann folgende Ausgabe konfiguriert werden:
1: Yes 2
2: No 2
3: Yes 3
genauso ist es möglich jedes andere Feld auszublenden.

Dies ist hilfreich bei Datensätzen, deren Anzahl von Datenfeldern in der Größenordnung von 15 oder mehr liegen.

### Statistik

SuccsessfulAktion :
Ja : 2
Nein : 1
UsedResources :
resource Nr- 2: 2
all Resources : 1
InitiatorIdentifier :
12:2
23:1 1

### Selektoren:

### Einfaches Selektieren

Wenn beispielsweise der Benutzer nur die erfolgreichen Aktionen sehen möchte, setzt er einen Selektor auf SuccsessfulAktion und bekommt:

Zeilenformat:
1: Yes 2 12
3: Yes 3 23
jedes andere Format ist auch möglich.

### Fehlererkennung:

Unter der Annahme, daß der Initiator "23" nicht alle Resourcen benutzen darf, kann dies mit Hilfe der boolschen Ausdrücke definiert werden.
Fehler = (UsedResources = All resorces).(InitiatorIdentifier = 23).

Dieser Ausdruck kann beliebig verlängert werden.

Die Ausgabe in der entsprechend definierten Fehlerdatei ist wie folgt:
3: Yes 323
jedes andere Format ist auch möglich.

## Patentansprüche

1. Verfahren zur Analyse von Daten in Telekommunikationsanlagen, bei dem die Daten (101), insbesondere Massendaten, wie sie in Telekommunikationsanlagen systemintem erzeugt und/oder gespeichert werden, in ein oder mehrere Datensätze mit einem oder mehreren Datenfeldern untertellt werden, und unter Anwendung wählbarer Selektionskriterien Ausgabedateien in mehreren Formaten gleichzeitig erzeugt werden, wobei die Informationen der Daten in Inhaltselemente und Zugriffselemente aufgeteilt werden, die wiederum für sich gruppiert werden,
**dadurch gekennzeichnet,**
**dass** die Datensätze entsprechend der Ordnungskriterien einzeln in einem Datenumformer in Inhaltsdaten in einem internern Zwischenformat (104) umgewandelt werden, und in einer Symbolzugriffstabelle (106) die Namen aller Datenfelder definiert sind, und dass die Symbolzugriffstabelle einen Zugriff auf jedes Datenfeld des Zwischenformats mit Hilfe des Namens des Datenfeldes und einen Zugang für Selektions- oder Filtersysteme (107) bereitstellt.

2. Verfahren nach Anspruch 1,
wobei Inhaltsdaten entsprechend der Ordnungskriterien in mehrere Datensätze mit gleicher Unterstruktur aus Datenfeldern gruppiert werden.

3. Verfahren nach einem der Ansprüche 1 oder 2,
wobei statistische Funktionen (110) vorgesehen sind, wobei zur Erstellung von Statistiken auf die Daten und/oder auf die durch Datenumformer gruppierten Daten zugegriffen wird.

## Claims

1. Method for the analysis of data in telecommunications systems, in which the data (101), in particular mass data such as are generated and/or stored internally to the system in telecommunications systems, are divided into one or more data records with one or more data fields, and, applying optional selection criteria, output files are generated simultaneously in several formats, the information of the data being split into content elements and access elements which are in turn grouped independently, **characterised in that** according to the classification criteria the data records are converted individually in a data converter to content data in an internal intermediate format (104), and in a symbol access table (106) the names of all data fields are defined, and **in that** the symbol access table provides access to each data field of the intermediate format by means of the name of the data field and access for selection and filter systems (107).

2. Method according to claim 1, content data being grouped according to the classification criteria into several data records with the same substructure consisting of data fields.

3. Method according to one of claims 1 or 2, statistical functions (110) being provided, the data and/or the data grouped by data converter being accessed to provide statistics.

## Revendications

1. Procédé d'analyse de données dans des installations de télécommunication, selon lequel les données (101), en particulier les données de masse telles qu'elles sont produites et/ou stockées au niveau interne dans les installations de télécommunication, sont divisées en un ou plusieurs enregistrements avec un ou plusieurs champs de données, et des fichiers de sortie sont produits en même temps en plusieurs formats avec l'application de critères de sélection pouvant être choisis, les informations des données étant divisées en éléments de contenu et en éléments d'accès qui sont eux-mêmes groupés,
**caractérisé en ce que** les enregistrements, suivant les critères d'ordre, sont transformés individuellement, dans un transformateur de données, en données de contenu dans un format intermédiaire interne (104), et les noms de tous les champs de données sont définis dans un tableau d'accès de symboles (106), et **en ce que** le tableau d'accès de symboles fournit un accès à chaque champ de données du format intermédiaire à l'aide du nom du champ de données, et un accès pour des systèmes de sélection ou de filtre (107).

2. Procédé selon la revendication 1, selon lequel les données de contenu, suivant les critères d'ordre, sont groupées en plusieurs enregistrements de même sous-structure à partir de champs de données.

3. Procédé selon la revendication 1 ou 2, selon lequel des fonctions statistiques (110) sont prévues, étant précisé que pour établir des statistiques, on accède aux données et/ou aux données groupées par des transformateurs de données.
